# EUROPÄISCHE PATENTSCHRIFT

(11) **EP 0 415 057 B1**
(45) Veröffentlichungstag und Bekanntmachung des Hinweises auf die Patenterteilung: **10.11.1993**
(21) Anmeldenummer: 90113838.8
(22) Anmeldetag: 19.07.1990
(51) Int. Cl.: H02K 3/24, H02K 1/32

(54) **Anordnung zur Führung des Kühlmediums in Schenkelpolmaschinen**
Device for conveying the cooling medium in salient-pole machines
Dispositif pour conduire l'agent de refroidissement dans les machines à pôles saillants

(30) Priorität: 29.08.1989 CH 3136/89
(43) Veröffentlichungstag der Anmeldung: 06.03.1991
(73) Patentinhaber: ASEA BROWN BOVERI AG, 5400 Baden (CH)
(72) Erfinder: Baer, Jürgen, CH-5506 Mägenwil (CH); Stöckli, Franz, CH-5244 Birrhard (CH)

(56) Entgegenhaltungen:
- GB-A- 509 359
- US-A- 3 261 995
- US-A- 3 514 647

## Beschreibung

### TECHNISCHES GEBIET

Die Erfindung bezieht sich auf eine Anordnung zur Führung des Kühlmediums in Schenkelpolmaschinen. Sie betrifft insbesondere eine Anordnung zur forcierten Zufuhr des Kühlmediums in den Spalt zwischen dem Polkern und der Polspule.

Die Erfindung nimmt dabei Bezug auf einen Stand der Technik, wie er sich beispielsweise aus der DE-AS 11 91 475 ergibt.

### TECHNOLOGISCHER HINTERGRUND UND STAND DER TECHNIK

Die Kühlung der Erregerwicklung von Schenkelpolläufern elektrischen Maschinen bereitet oft erhebliche technische Schwierigkeiten. Während es für die Kühlluftführung in den Pollücken bereits eine Reihe von technisch einwandfreien und funktionsfähigen Vorschlägen gibt, sind die bisher bekannten Massnahmen zur Polspulenhinterlüftung, also der Abfuhr der Wärme aus dem Spalt zwischen Polspule und Polkern weniger befriedigend. Dazu gehören die Thermosiphon-Kühlung gemäss der US-PS 3,739,212 und die gezielte Führung von Kühlmittel durch besagten Spalt und von dort aus durch Bohrungen in der Polkappe in den Maschinenluftspalt, wie es in der DE-AS 11 91 475, Fig. 1, dargestellt ist.

Die Thermosiphonkühlung beruht auf der Ausnutzung von Dichteunterschieden, ist wenig wirksam und ist auch einer sauberen Berechnung nicht zugänglich.

Die Polspulenhinterlüftung führt zwangsläufig zur Schwächung der ohnehin hochbelasteten Polschuhe.

### KURZE DARSTELLUNG DER ERFINDUNG

Der Erfindung liegt die Aufgabe zugrunde, eine Anordnung zur forcierten Zufuhr des Kühlmediums der eingangs genannten Gattung zu schaffen, die hohe Kühlmediumsgeschwindigkeiten zulässt, ohne die Polkappe zu schwächen.

Diese Aufgabe wird erfindungsgemäss dadurch gelöst, dass im Spalt zwischen Polkern und Polspule eine Leiteinrichtung vorgesehen ist, welche den Spalt in zwei Räume unterteilt, die im wesentlichen nur am polkappenseitigen Ende des Spalts in freier Verbindung stehen, wobei vom Druckerzeuger aus gesehen beide Räume nacheinander durchströmt sind.
Derartige Leiteinrichtungen bestehen im einfachsten Fall aus U-förmig gebogen Blechen oder Platten, wobei jeder Schenkel in die einander zugewandten Spalte zweier benachbarter Pole eintauchen, und die Basis des Blechs bzw. der Platte in der Pollücke gelegen ist und auf diese Weise den Raum zwischen benachbarten Polen in einen Einströmraum und einen Abströmraum für das Kühlmedium unterteilt.

Der Vorteil der Erfindung ist insbesondere darin zu sehen, dass sie sich sowohl bei Neukonstruktionen als auch bei der Umrüstung bestehender Maschinen verwenden lässt. Durch die erfindungsgemässe Belüftungsart werden höhere Kühlmittelgeschwindigkeiten am Rücken der Polspulen erzeugt, die zu höheren Wärmeübergangszahlen führen und die Leitertemperaturen der Polspulen senken. Dadurch kann die Ausnutzung der Maschine gesteigert werden.

Weitere Vorteile der Erfindung und Ausführungsbeispiele werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: ein erstes Ausführungsbeispiel der Erfindung in stark schematisierter Form bei einer einseitig belüfteten Schenkelpolmaschine im Längsschnitt;
- Fig. 2: einen Teilquerschnitt durch die Maschine nach Fig. 1;
- Fig.3: ein zweites Ausführungsbeispiel der Erfindung in stark schematisierter Form bei einer einseitig belüfteten Schenkelpolmaschine im Längsschnitt mit gegenüber Fig.1 abweichender Kühlmittelführung;
- Fig.4: einen Teilquerschnitt durch die Maschine nach Fig. 4;
- Fig.5: ein drittes Ausführungsbeispiel der Erfindung in stark schematisierteren Form bei einer symmetrisch belüftete Schenkelpolmaschine im Längsschnitt;
- Fig.6: einen mehr ins Detail gehenden Teilquerschnitt durch zwei benachbarte Pole in der Höhe der Polwicklungsabstützung.

### WEGE ZUR AUSFÜHRUNG DER ERFINDUNG

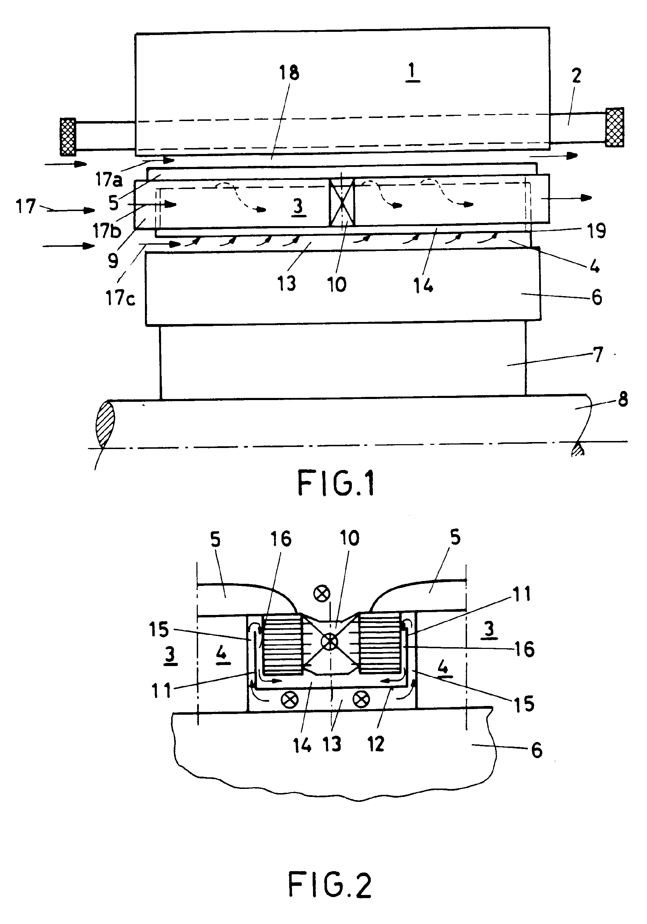

In Fig. 1 ist eine Schenkelpolmaschine im Längsschnitt stark vereinfacht dargestellt. Der Statorblechkörper ist mit 1, die Statorwicklung mit 2 bezeichnet. Ein Pol 3, bestehend im wesentlichen aus Polkern 4 und Polkappe 5 ist auf dem Rotorjoch 6 und dieses wiederum auf dem Rotorkörper 7 befestigt. Mit 8 ist die Welle der Maschine gekennzeichent. Jeder Pol 3 weist eine Polwicklung 9 auf, die in bekannter Weise mittels Abstützelementen 10 in der Pollücke abgestützt ist.

Die Polspulen 9 sind vom Polkern 4 beabstandet. In die einander zugewandten Spalte je zweier beanchbarter Pole sind die Schenkel 11 einer U-förmigen Leiteinrichtung 12 eingeschoben, deren Basis die Pollücke in zwei Räume 13 und 14 unterteilt. Die Schenkel 11 unterteilen gleichermassen die Spalte zwischen der Polspule 9 und Polkern 4 in zwei Räume 15 und 16. Diese sind im polkappennahen Bereich des Spaltes miteinander verbunden.

Beim Betrieb der Maschine strömt Kühlmittel in Richtung der Pfeile 17 (von einem nicht dargestellten Druckerzeuger) in die Pollücken. Dieser Kühlmittelstrom verteilt sich im wesentlichen auf drei Teilströme: einen ersten Strom 17a durch den Maschinenluftspalt 18, einen zweiten Strom 17b durch den Raum zwischen den Polspulen 9 zur Kühlung der Polspulen und einen dritten Strom 17c in den Raum 13 unterhalb der Leiteinrichtung 12, dem Pollückengrundkanal. Infolge Fliehkrafteinwirkung wird dieser dritte Strom in den Raum 15 abgelenkt, streicht an den Wänden der Polkerne 4 entlang radial nach aussen, wird dann an der Polkappe 5 umgelenkt und strömt durch den Raum 16 zwischen dem Schenkel 11 und der inneren Wandung der Polspulen in den Raum 14, wo er sich mit dem zweiten Teilstrom sukzessive wieder vereinigt. Eine Blende 19 verschliesst den Pollückengrundkanal 13 am anderen Maschinenende.

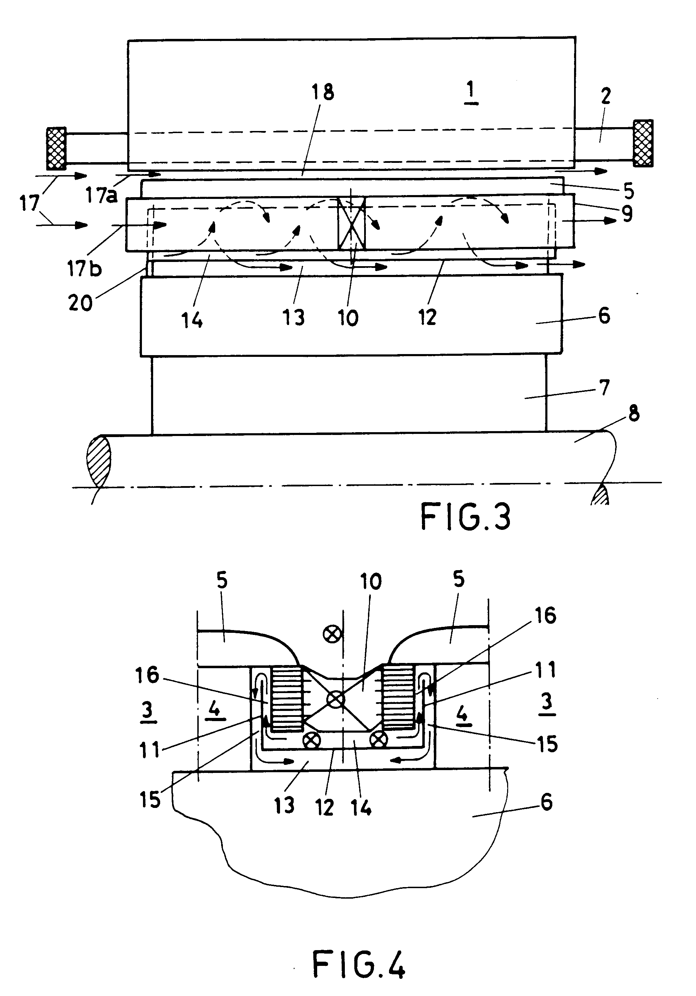

In den Figuren 3 und 4 ist eine Variante der Belüftungsanordnung dargestellt, bei welcher die Strömungsrichtung des Kühlmediums in den Räumen 15 und 16 entgegengesetzt zu derjenigen nach Fig.1 und 2 ist. Hier ist bei sonst gleichartigem Aufbau - gleiche Teile sind in den Figuren 1 bis 4 mit einunddenselben Bezugszeichen versehen - der Raum 13 (Pollückengrundkanal) auf der Einströmseite der Maschine mit einer Blende 20 verschlossen, am anderen Ende hingegen ist er offen. Das Kühlmittel strömt demgemäss in den Raum zwischen den Polen, ein Teilstrom davon gelangt in den Raum 14 und von dort aus in den Raum 16, nach Umlenkung an der polkappenunterseite radial nach innen durch den Raum 15, von dort aus in den Raum 13, den Pollückengrundkanal, und verlässt diesen an der anderen Maschinenseite.

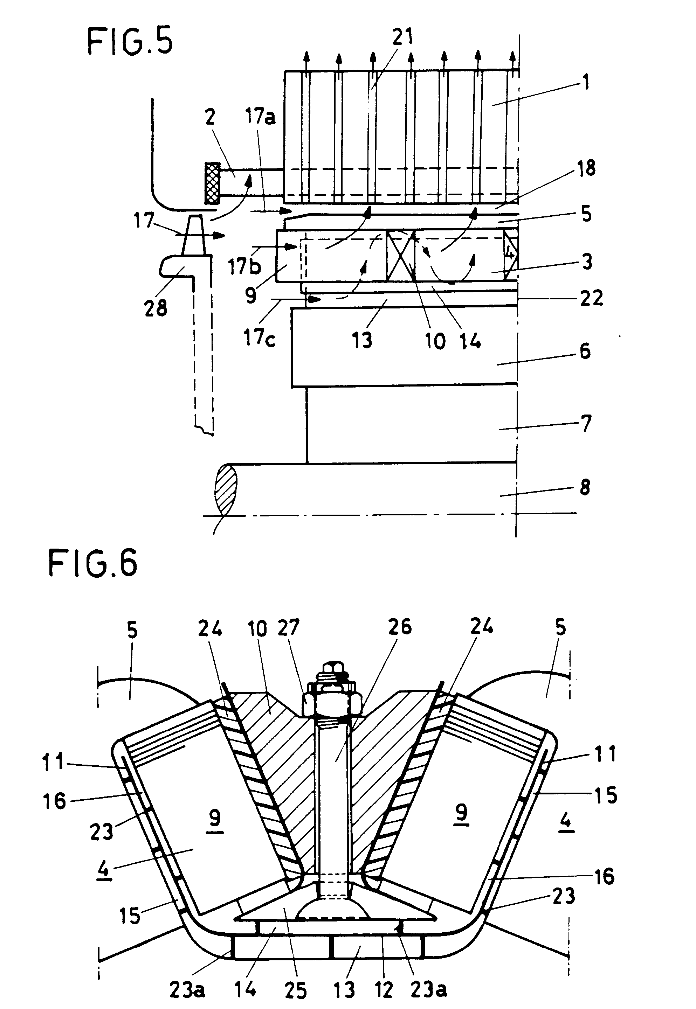

Bei Maschinen mit grösseren Eisenlängen erfolgt die Belüftung in der Regel von beiden Maschinenseiten her, wobei in aller Regel Druckerzeuger auf beiden Maschinenseiten angeordnet sind. Eine deartige Anordnung ist in Fig. 5 beispielsweise dargestellt, wobei nur eine Maschinenhälfte dargestellt ist, weil die andere spiegelbildlich dazu aufgebaut ist. Das Kühlmittel strömt dabei analog Fig. 1 in drei Teilströmen 17a, 17b und 17c durch die Maschine und verlässt diese durch Luftaustrittsschlitze 21 im Statorblechkörper 1. Zur Trennung der von beiden Seiten in die Maschine einströmenden Kühlmittelströme 17c ist in Maschinenmitte im Raum 13 und 14 eine Trennwand 22 vorgesehen. Abgesehen hiervon entspricht die Anordnung und der Aufbau der Leiteinrichtung 12 derjenigen nach Fig.1 und 2.

In Fig.6 ist die Anordnung und der Aufbau der Leiteinrichtung 12 detaillierter veranschaulicht. Die erforderliche Distanzierung der Schenkel 11 in den Spalten zwischen Polkern 4 und Polspule 9 erfolgt lokal durch Distanzstücke 23 aus Isoliermaterial, die auf beiden Seiten der Schenkel 11 angebracht sind. Die Distanzstücke auf der einen Seite der Schenkel 11 sind gegenüber den Distanzstücken auf der anderen Seite der Schenkel versetzt und so bemessen, dass die üblicherweise aus nichtmagnetischem Stahlblech bestehenden Schenkel durch Federkraft im Spalt eingespannt sind. Werden die Leiteinrichtungen aus einem Isoliermaterial, z. B. glasfaserverstärktem Kunstharz hergestellt, so können die Distanzstücke mit Vorteil einstückig mit der Leiteinrichtung 12 ausgebildet sein, z. B. in Gestalt warzenartiger Vorsprünge oder dergleichen.
Die Abstützung der Leiteinrichtung 12 im Pollückengrundkanal 13 kann in gleicher Weise mittels Distanzstücken 23a erfolgen. Möglich ist auch eine Befestigung durch Schrauben und Distanzelemente oder andere Befestigungsmittel, da der Pollückengrundkanal ausserhalb der Polspulen-Abstützelemente 12 frei zugänglich ist.

Der Vollständigkeit halber ist in Fig.6 auch die Isolation 24 zwischen dem Abstützelement 10 und den Polspulen 9 eingezeichnet, ebenso die Verspannung des Abstützelementes 10 mittels Stützplatte 25 und Schraubenbolzen 26 mit Mutter 27. Diese Art der Abstützung der Polspulen 9 erfolgt in Anlehung an die eingangs genannte US-PS 3,739,212 und ist dort ausführlich beschrieben.

## Patentansprüche

1. Anordnung zur forcierten Zufuhr des Kühlmediums in den Spalt zwischen dem Polkern (4) und der Polwicklung (9) von Schenkelpolmaschinen, dadurch gekennzeichnet, dass im Spalt zwischen Polkern (4) und Polspule (9) eine Leiteinrichtung (12) vorgesehen ist, welche den Spalt in zwei Räume (15,16) unterteilt, die im wesentlichen nur am polkappenseitigen Ende des Spalts in freier Verbindung stehen, wobei vom Druckerzeuger (28) aus gesehen beide Räume (15,16) nacheinander durchströmt sind.

2. Anordnung nach Anspruch 1, dadurch gekennzeichnet, dass die Leiteinrichtung (12) sich über die gesamte axiale Länge der Pole (3) erstreckt.

3. Anordnung nach Anspruch 1 oder 2, dadurch gekennzeichnet, dass die Leiteinrichtung (12) U-förmig mit zwei Schenkeln (11) und einer die Schenkel verbindenden Basis besteht, welche Schenkel (11) in den besagten Spalt zwischen Polkern (4) und Polspule (9) hineinragt, wobei an den freien Schenkelenden je ein Spalt zwischen diesen und der Polkappe (5) freibleibt.

4. Anordnung nach Ansprüche 3, dadurch gekennzeichnet, dass die Basis der Leiteinrichtung (12) vom Grund der Pollücke beabstandet ist und der dadurch entstandene Raum (13) als Zuström- oder Abströmraum für das durch den besagten Spalt strömende Kühlmittel dient.

5. Anordnung nach Anspruch 3 oder 4, dadurch gekennzeichnet, dass die Distanzierung der Schenkel (11) und der Basis vom Polkern (4) und Polspule (9) durch Distanzstücke (23, 23a) erfolgt, die an der Leiteinrichtung (12) angebracht oder einstückig mit dieser ausgebildet sind.

6. Anordnung nach einem der Ansprüche 1 bis 5, dadurch gekennzeichnet, dass bei einer einseitig belüfteten Maschine der Raum (13) zwischen der Leiteinrlchtung (12) und dem Grund der Pollücke auf der der Einströmseite gegenüberliegenden Maschinenseite durch eine Blende (19) verschlossen ist, und der besagte Raum (13) als Zuströmraum für das durch den Spalt zwischen Polkern (4) und Polspule (9) zu leitende Kühlmittel dient (Fig.2).

7. Anordnung nach einem der Ansprüche 1 bis 5, dadurch gekennzeichnet, dass bei einseitig belüfteten Maschinen der Raum (13) zwischen der Leiteinrichtung (12) und dem Grund der Pollücke auf der Einströmseite der Maschine durch eine Blende (20) verschlossen ist, und der besagte Raum (13) als Ausströmraum für das durch den Spalt zwischen Polkern (4) und Polspule (9) strömende Kühlmittel dient (Fig.4).

8. Anordnung nach einem der Ansprüche 1 bis 5, dadurch gekennzeichnet, dass bei beidseitig belüfteten Maschinen etwa in Maschinenmitte eine Trennwand (22) vorgesehen ist, welche zumindest den Raum (13) zwischen Leiteinrichtung (12) und dem Grund der Pollücke axial unterteilt (Fig.5)

## Claims

1. Arrangement for the forced feeding of the coolant into the gap between the pole core (4) and the pole winding (9) of salient pole machines, characterised in that a directing device (12) is provided in the gap between pole core (4) and pole coil (9), which directing device (12) divides the gap into two spaces (15, 16) which are freely connected essentially only at the pole cap-side end of the gap, flow occurring successively through both spaces (15, 16) viewed from the pressure generator (28).

2. Arrangement according to Claim 1, characterised in that the directing device (12) extends over the entire axial length of the poles (3).

3. Arrangement according to Claim 1 or 2, characterised in that the directing device (12) consists of a U shape with two legs (11) and a base connecting the legs, which legs (11) project into the aforesaid gap between pole core (4) and pole coil (9), in each case one gap remaining free at the free leg ends between the said leg ends and the pole cap (5).

4. Arrangement according to Claim 3, characterised in that the base of the directing device (12) is spaced from the base of the pole space and the resulting space (13) serves as inflow or outflow space for the coolant flowing through the aforesaid gap.

5. Arrangement according to Claim 3 or 4, characterised in that the spacing of the legs (11) and of the base from the pole core (4) and pole coil (9) is effected by means of spacing elements (23, 23a) which are attached to the directing device (12) or are of integral construction therewith.

6. Arrangement according to one of Claims 1 to 5, characterised in that, in a machine with ventilation on one side, the space (13) between the directing device (12) and the base of the pole space on the side of the machine opposite the inflow side is closed by a shutter (19) and the aforesaid space (13) serves as an inflow space for the coolant which is to be conducted through the gap between pole core (4) and pole coil (9) (Fig. 2).

7. Arrangement according to one of Claims 1 to 5, characterised in that, in machines with ventilation on one side, the space (13) between the directing device (12) and the base of the pole space on the inflow side of the machine is closed by a shutter (20), and the aforesaid space (13) serves as an outflow space for the coolant flowing through the gap between pole core (4) and pole coil (9) (Fig. 4).

8. Arrangement according to one of Claims 1 to 5, characterised in that, in machines with ventilation on both sides, a partition wall (22) is provided approximately in the centre of the machines, which partition wall (22) axially divides at least the space (13) between directing device (12) and the base of the pole space (Fig. 5).

## Revendications

1. Arrangement pour l'alimentation forcée de l'agent de refroidissement dans l'entrefer entre le noyau polaire (4) et l'enroulement polaire (9) de machines à pôles saillants, caractérisé en ce que dans l'entrefer entre le noyau polaire (4) et l'enroulement polaire (9), il est prévu un dispositif de guidage (12) qui divise l'entrefer en deux volumes (15, 16) qui ne sont en communication libre essentiellement qu'à l'extrémité de l'entrefer située du côté des chapeaux de pôles, les deux volumes (15, 16) étant parcourus l'un après l'autre, en regardant à partir du générateur de pression (28).

2. Arrangement suivant la revendication 1, caractérisé en ce que le dispositif de guidage (12) s'étend sur la totalité de la longueur axiale des pôles (3).

3. Arrangement suivant la revendication 1 ou 2, caractérisé en ce que le dispositif de guidage (12) en forme de U se compose de deux ailes (11) et d'une base reliant les ailes, ailes (11) qui s'engagent dans ledit entrefer entre le noyau polaire (4) et l'enroulement polaire (9), une fente restant libre à l'extrémité libre de chacune des ailes entre celle-ci et le chapeau de pôle (5).

4. Arrangement suivant la revendication 3, caractérisé en ce que la base du dispositif de guidage (12) est distante du fond de l'espace interpolaire et en ce que le volume ainsi formé (13) sert de chambre d'arrivée ou d'évacuation pour l'agent de refroidissement traversant ledit entrefer.

5. Arrangement suivant la revendication 3 ou 4, caractérisé en ce que l'écartement des ailes (11) et de la base par rapport au noyau polaire (4) et à l'enroulement polaire (9) est réalisé par des pièces d'écartement (23, 23a), qui sont appliquées sur le dispositif de guidage (12) ou qui sont intégrées à celui-ci.

6. Arrangement suivant l'une ou l'autre des revendications 1 à 5, caractérisé en ce que, dans une machine ventilée d'un seul côté, la chambre (13) entre le dispositif de guidage (12) et le fond de l'espace interpolaire est fermée par un écran (19) sur le côté de la machine situé à l'opposé du côté d'entrée, et en ce que ladite chambre (13) sert de chambre d'arrivée pour l'agent de refroidissement à guider à travers l'entrefer entre le noyau polaire (4) et l'enroulement polaire (9). (Fig. 2).

7. Arrangement suivant l'une ou l'autre des revendications 1 à 5, caractérisé en ce que, dans les machines ventilées d'un seul côté, la chambre (13) entre le dispositif de guidage (12) et le fond de l'espace interpolaire est fermée par un écran (20) sur le côté d'entrée de la machine, et en ce que ladite chambre (13) sert de chambre d'évacuation pour l'agent de refroidissement circulant à travers l'entrefer entre le noyau polaire (4) et l'enroulement polaire (9). (Fig. 4).

8. Arrangement suivant l'une ou l'autre des revendications 1 à 5, caractérisé en ce que, dans les machines ventilées des deux côtés, il est prévu, environ au milieu de la machine, une paroi de séparation (22), qui divise axialement au moins la chambre (13) entre le dispositif de guidage (12) et le fond de l'espace interpolaire. (Fig. 5).
